# EUROPEAN PATENT APPLICATION

(11) **EP 1 406 332 A1**
(43) Date of publication of application: **07.04.2004**
(21) Application number: 02758984.5
(22) Date of filing: 21.06.2002
(51) Int. Cl.: H01M 8/04

(54) **METHOD AND DEVICE FOR REMOVING INERT IMPURITIES**

(30) Priority: 09.07.2001 RU 2001118735
(71) Applicant: Zakrytoe Aktsionernoe Obschestvo Independent Power Technologies "IPT", St. Petersburg, 196084 (RU)
(72) Inventor: KARICHEV, Ziya Ramizovich, Moscow, 129626 (RU)
(74) Representative: Zellentin, Rüdiger, Dr.
(86) International application number: PCT/RU2002/000308
(87) International publication number: WO 2003/007410

(57) **Abstract**

The invention relates to the field of fuel cells (FC) with gaseous reagents, in particular, to methods for the purge of inert gas admixture by blowing and devices for carrying out the methods. In accordance with the invention, a method for purge of inert gas admixture, at least in respect to one of the working gases, from a stack of FCs, the stack comprising an input pipe and an output pipe for feeding and discharging working gas from the stack and at least two FCs series-connected in respect to the working gas and positioned before the output pipe for discharging working gas from the stack, the method comprising feeding working gas into the input pipe and periodically discharging working gas from the output pipe during a predetermined period of time, at the moment of discharge of gas from the stack, working gas is fed from the input pipe to a corresponding input of at least one of the series-connected FCs positioned before the output pipe for discharging working gas from the stack, and feeding the working gas from the input pipe to a corresponding input of the FCs is terminated after discharge of working gas from the stack stops. A device for the purge of inert gas admixture, at least in respect to one of the working gases, from a stack of FCs, comprising an input pipe with a controllable valve for feeding working gas into the stack of FCs and an output pipe with a controllable valve for discharging working gas from the stack of FCs and at least two FCs, series-connected in respect to working gas and positioned before the output pipe for discharging working gas from the stack, characterized in that the input pipe for feeding working gas from a section between the valve and stack of FCs is connected through a controllable valve by a pipe to a corresponding input of at least one of the series-connected FCs positioned before the output pipe for discharging working gas from the stack.

## Description

### Field of the Invention

The invention relates to the field of fuel cells (FC) with gaseous reagents, in particular, to methods for the purge of inert gas admixture by blowing and devices for carrying out the methods.

### Background of the Invention

A method and device for the purge of inert gas admixture from a stack of fuel cells (FCs) that comprises FCs, connected in respect to working gases in parallel, and pipes for feeding and discharging working gases with controllable valves, by periodically discharging working gases from the stack when corresponding valves are open, are known (see FR 2325204, class H 01 M 8/04, 15 April 1977).

A drawback of the known method and device for the purge of inert gas admixture is the higher consumption of working gas, this being related to the necessity of blowing each of the parallel-connected FCs.

A method and device for the purge of inert gas admixture from a stack of FCs that comprises FCs connected in respect to working gases in series, which method and device are free of the drawback indicated above. In the variant under consideration, the inert gas admixture are carried by a flow of the working gas used in the reaction to the last downstream FC. The inert gas admixture are purged from this FC by discharging a small amount of the working gas when a corresponding valve is open (see DE 1596311, H 01 M 27/12, 27 May 1971).

A drawback of this method and device for the purge of inert gas admixture is the significant pressure differential between the first and the last FC in the downstream direction of the working gas, which limits the field of possible use of this variant of purge of inert gas admixture under consideration.

Among the known methods of purge of inert gas admixture, the method most similar in respect to the combination of essential features and achieved technical result is the method for purge of inert gas admixture, at least in respect to one of the working gases, from an FC stack comprising an input pipe and an output pipe for feeding and discharging the working gas from the stack and at least two fuel cells series-connected in respect to the working gas and positioned before the output pipe for discharging working gas from the stack, by feeding the working gas into the input pipe and periodically discharging working gas from the output pipe during a predetermined time period (see US 5478662, class H 01 M 8/04, 26 December 1995).

A drawback of the cited known method for purge of inert gas admixture is the incomplete purge of inert gas admixture from the FCs preceding in respect to movement of the working gas the series-connected FCs. This results in a reduction of the characteristics and life of the FC stack.

Among known devices for the purge of inert gas admixture, the device most similar in respect to the combination of essential features and achieved technical result is the device for purge of inert gas admixture, at least in respect to one of the working gases, from a stack of fuel cells, the device comprising an input pipe with a controllable valve for feeding working gas into the stack of fuel cells and an outlet pipe with a controllable valve for discharging working gas from the stack of fuel cells and at least two fuel cells series-connected in respect to the working gas and positioned before the output pipe for discharging working gas from the stack (see US 5478662, class H 01 M 8/04, 26 December 1995).

A drawback of the cited known device for purge of inert gas admixture is the incomplete purge of inert gas admixture from the FCs preceding the series-connected FCs in respect to movement of the working gas. This results in a reduction of the performance and life of the FC stack.

### Summary of the Invention

An object of the invention is to provide a method for purge of inert gas admixture, at least in respect to one of the working gases, from a stack of FCs, the method providing reliable purge of inert gas admixture and maintenance of predetermined characteristics and life of the FC stack.

The stated object is achieved in that a method for purge of inert gas admixture, at least in respect to one of the working gases, from a stack of FCs, the stack comprising an input pipe and an output pipe for feeding and discharging working gas from the stack and at least two FCs series-connected in respect to the working gas and positioned before the output pipe for discharging working gas from the stack, said method comprising: feeding working gas into the input pipe and periodically discharging working gas from the output pipe during a predetermined period of time. At the moment of discharge of gas from the stack, working gas is fed from the input pipe to a corresponding input of at least one of the series-connected FCs positioned before the output pipe for discharging working gas from the stack, and feeding the working gas from the input pipe to a corresponding input of the FCs is terminated after discharge of working gas from the stack stops. The presented method for purge of inert gas admixture from the stack of FCs provides for the reliable purge of impurities from the last FCs and mixture of the working gases in the preceding FCs. This is provided for by feeding working gas to a corresponding input of series-connected FCs from the input pipe. Increased pressure of the working gas ensures the reliable purge of inert gas admixture from the last FCs and mixture of the gases in the preceding FCs, which promotes maintenance of the predetermined characteristics and life of the FCs.

It is advisable at the moment of discharge of the working gas from the stack to feed working gas from the input pipe to a corresponding input of the last FC before the output pipe for discharging working gas from the stack. Such feeding of the working gas ensures reliable purge of inert gas admixture from the last FC and mixture of gases in preceding FCs, which promotes the maintenance of predetermined characteristics and life of the FCs.

Another object of the invention is to provide an device for the purge of inert gas admixture, at least in respect to one of the working gases, from a stack of FCs, the device ensuring reliable purge of inert gas admixture and maintenance of predetermined characteristics and life of a stack of FCs.

The stated object is achieved in that in a device for the purge of inert gas admixture, at least in respect to one of the working gases, from a stack of FCs, comprising an input pipe with a controllable valve for feeding working gas into the stack of FCs and an output pipe with a controllable valve for discharging working gas from the stack of FCs and at least two FCs, series-connected in respect to working gas and positioned before the output pipe for discharging working gas from the stack, the input pipe for feeding working gas from a section between the valve and stack of FCs is connected through a controllable valve by a pipe to a corresponding input of at least one of the series-connected FCs positioned before the output pipe for discharging working gas from the stack. Such a connection of the input pipe for feeding working gas to a corresponding input of the FCs ensures reliable purge of inert gas admixture from the last FCs and mixture of gases in preceding FCs, which promotes the maintenance of predetermined characteristics and life of the FCs.

It is advisable that the input pipe for feeding working gas be connected between the valve and stack of FCs through a controllable valve by a pipe to a corresponding input of the last FC positioned before the output pipe for discharging the working gas from the stack. Such a feeding of the working gas ensures reliable purge of inert gas admixture from the last FC and mixture of the gases in the preceding FCs, which promotes maintenance of the predetermined characteristics and life of a stack of FCs.

The essence of the invention is explained by the drawing and description of operation of the claimed method and device.

### Brief Description of the Drawings

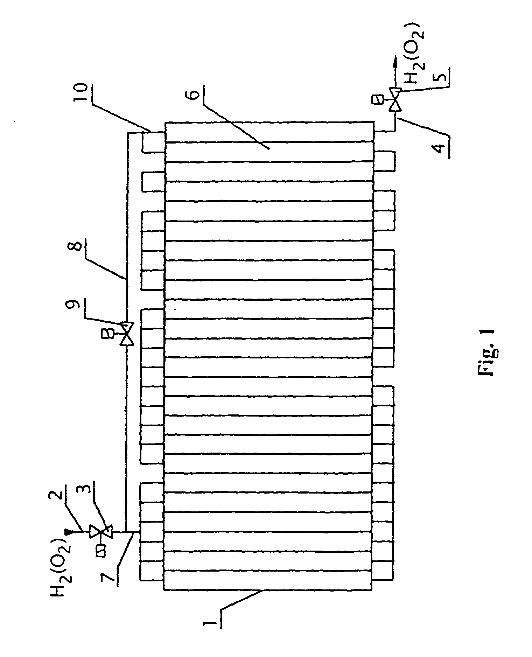

Fig. 1 shows a device for the purge of inert gas admixture from a stack of FCs.

### Embodiment of Invention

The proposed device comprises a FC stack 1, an input pipe 2 for feeding a working gas (hydrogen/oxygen) provided with a controllable valve 3, an output pipe 4 for discharging the working gas (hydrogen/oxygen) provided with a controllable valve 5, fuel cells 6 series-connected in respect to the working gas and positioned before the pipe 4 for discharging the working gas. A section 7 of the input pipe between the valve and the stack is connected by a pipe 8 via a controllable valve 9 to an input 10 of the last FC 6 positioned before the output pipe 4.

The proposed method and device for the purge of inert gas admixture operate in the following manner. The working gas used for the reaction is fed into the gas chambers of the FC stack 1 via the input pipe 2. The series-connected FCs 6 positioned before the pipe 4 for discharging the working gas promote the accumulation of inert gas admixture in the last cells. In order to ensure the predetermined characteristics and reliability of operation of the FC stack, the inert gas admixture are periodically disposed via the pipe 4 for discharging the working gas. For reliable purge of the inert gas admixture at the moment of opening the valve 5, the input pipe 2 on the section 7 is connected via the pipe 8 through the valve 9 to the input 10 of one of the last FCs. The higher pressure of the working gas fed into the FC ensures the purge of inert gas admixture from the last FCs and also mixture of the gas in the FCs preceding the last FC 6. After purge of the inert gas admixture by discharging the gas the valves 5 and 9 are closed. The next operation for purge by blowing in accordance with a predetermined algorithm of operation of the FC stack is carried out in a similar manner.

### Industrial Applicability

This invention is designed primarily for use in electrochemical generators with the aim of providing optimum operation modes.

The detailed description of the construction and principle of operation of the proposed invention given above are sufficient for specialists in this field of art so that the conclusion may be made that its practical realization is possible with achievement of the indicated technical result.

## Claims

1. A method for purge of inert gas admixture, at least in respect to one of working gases, from a stack of fuel cells, the stack comprising an input pipe and an output pipe for feeding and discharging working gas from the stack and at least two fuel cells series-connected in respect to the working gas and positioned before the output pipe for discharging working gas from the stack, said method comprising feeding working gas into the input pipe and periodically discharging working gas from the output pipe during a predetermined period of time, **characterized in that** at the moment of discharge of gas from the stack, working gas is fed from the input pipe to a corresponding input of at least one of the series-connected fuel cells positioned before the output pipe for discharging working gas from the stack, and feeding the working gas from the input pipe to a corresponding input of the fuel cells is terminated after discharge of working gas from the stack stops.

2. The method for purge of inert gas admixture according to claim 1, **characterized in that** at the moment of discharge of the working gas from the stack, working gas is fed from the input pipe to a corresponding input of the last fuel cell before the output pipe for discharging working gas from the stack.

3. A device for the purge of inert gas admixture, at least in respect to one of the working gases, from a stack of fuel cells, comprising an input pipe with a controllable valve for feeding working gas into the stack of fuel cells and an output pipe with a controllable valve for discharging working gas from the stack of fuel cells and at least two fuel cells, series-connected in respect to working gas and positioned before the output pipe for discharging working gas from the stack, the input pipe for feeding working gas from a section between the valve and stack of fuel cells is connected through a controllable valve by a pipe to a corresponding input of at least one of the series-connected fuel cells positioned before the output pipe for discharging working gas from the stack.

4. The device for the purge of inert gas admixture according to claim 3, **characterized in that** the input pipe for feeding working gas is connected between the valve and stack of fuel cells through a controllable valve by a pipe to a corresponding input of the last fuel cell positioned before the output pipe for discharging working gas from the stack.
